# EUROPÄISCHE PATENTANMELDUNG

(11) **EP 1 469 259 A2**
(43) Veröffentlichungstag der Anmeldung: **20.10.2004**
(21) Anmeldenummer: 04006806.6
(22) Anmeldetag: 22.03.2004
(51) Int. Cl.: F24J 2/04, F24J 2/46

(54) **Rahmenprofil für einen Sonnenkollektor**

(30) Priorität: 24.03.2003 DE 20304745 U
(71) Anmelder: SCHÜCO International KG, 33609 Bielefeld (DE)
(72) Erfinder: Thole, Frank, 33739 Bielefeld (DE)
(74) Vertreter: Dantz, Jan Henning

(57) **Zusammenfassung**

Gegenstand der Erfindung ist ein aus Leichtmetall, insbesondere aus Aluminium, hergestelltes Rahmenprofil (1) für einen Sonnenkollektor.

Erfindungsgemäß ist das Rahmenprofil (1) aus einem Außenprofil (2) und einem Innenprofil (3) aus Aluminium sowie aus mindestens einem, mit dem Außenprofil (2) einerseits und dem Innenprofil (3) andererseits verbundenen Isoliersteg (4), vorzugsweise aus Kunststoff, hergestellt.

Dadurch wird ein wärmegedämmtes Rahmenprofil geschaffen, so dass ein daraus hergestellter Rahmen für einen Sonnenkollektor mit entsprechenden, wärmedämmenden Eigenschaften gebildet werden kann. Ein Sonnenkollektor mit entsprechenden Rahmenprofilen (1) kann somit ohne weiteres auch als Flächenelement in einer thermisch isolierten Fassade eingesetzt werden.

## Beschreibung

Die vorliegende Erfmdung betrifft ein aus Leichtmetall, insbesondere aus Aluminium hergestelltes Rahmenprofil für einen Sonnenkollektor.

Ein Rahmenprofil der gattungsgemäßen Art ist aus der DE 199 15 504 A1 bekannt.

Ein Sonnenkollektor, der unter Verwendung entsprechender Rahmenprofile aufgebaut ist, kann beispielsweise im Dachbereich eines Gebäudes oder, wie die DE 200 10 299 U1 zeigt, auch im Bereich einer Fassadenkonstruktion eingebaut sein.

Die bekannten Rahmenprofile der gattungsgemäßen Art sind einstückig aus Aluminium hergestellt, so dass aus derartigen Profilen aufgebaute Sonnenkollektoren nur eine geringe Wärmedämmung aufweisen. Somit können entsprechende Sonnenkollektoren in thermisch isolierten Fassaden nicht oder nur bedingt verwendet werden.

Der vorliegenden Erfindung liegt die Aufgabe zugrunde, ein Rahmenprofil der gattungsgemäßen Art zu schaffen, mit dem die vorstehend beschriebenen Nachteile behoben werden, das heißt, ein Rahmenprofil zu schaffen, mit dem ein wärmegedämmter Sonnenkollektor herstellbar ist.

Diese Aufgabe wird erfindungsgemäß dadurch gelöst, dass das Rahmenprofil aus einem Außenprofil und einem Innenprofil aus Aluminium sowie aus mindestens einem, mit dem Außenprofil einerseits und dem Innenprofil andererseits verbundenen Isoliersteg, vorzugsweise aus Kunststoff, besteht.

Durch diese Maßnahmen wird ein wärmegedämmtes Rahmenprofil geschaffen, so dass ein daraus hergestellter Rahmen für einen Sonnenkollektor mit entsprechenden, wärmedämmenden Eigenschaften gebildet werden kann, so dass ein Sonnenkollektor mit entsprechenden Rahmenprofilen ohne weiteres auch als Flächenelement in einer thermisch isolierten Fassaden einsetzbar ist.

Nach einer Weiterbildung der Erfindung ist vorgesehen, das Außen- und Innenprofil an ihren einander zugewandten Enden mit parallel zueinander verlaufenden Materialstegen versehen sind, welche untereinander durch zwei Isolierstege miteinander verbunden sind.

Bevorzugt ist dabei eine Ausführungsform, bei der die Materialstege des Außenund Innenprofiles gemeinsam mit den Isolierstegen einen Hohlkammersteg bilden, der über die äußere, seitliche Begrenzungsebene des Rahmenprofiles im übrigen hinaus vorsteht und einen in entsprechenden Tragkonstruktionen einklemmbaren Verbindungssteg bilden.

Ein Sonnenkollektor mit Rahmenprofilen dieser Art kann als Flächenelement in eine Tragkonstruktion eingebaut werden, ohne dass am Rahmen des Sonnenkollektors zusätzliche oder separat anbringbare Verbindungsmittel vorgesehen werden müssen.

Die umlaufenden Verbindungsstege können genutzt werden, um einen derartigen Sonnenkollektor in üblicher Weise innerhalb einer Tragkonstruktion einer Fassaden einzubinden und festzuklemmen.

Weitere Merkmale der Erfindung sind Gegenstand weitere Unteransprüche.

Ein Ausfiihrungsbeispiel der Erfindung ist in den beigefügten Zeichnungen dargestellt und wird im folgenden näher beschrieben. Es zeigen:
- Figur 1: einen schematisch dargestellten Schnitt durch einen Sonnenkollektor im Bereich eines Rahmenprofiles und
- Figur 2: einen schematisch dargestellten Schnitt durch eine Tragkonstruktion einer Fassade mit daran festgelegten Flächenelementen in Form von Sonnenkollektoren, deren Rahmen aus erfindungsgemäßen Rahmenprofilen gefertigt sind.

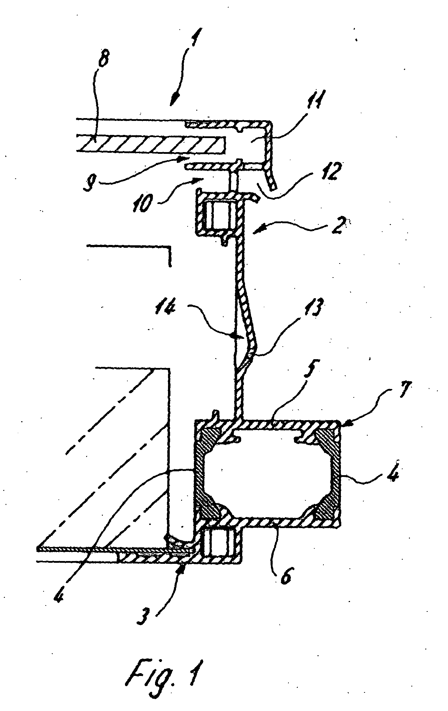

In Figur 1 ist ein erfindungsgemäßes Rahmenprofil 1 für einen thermisch getrennten Sonnenkollektor gezeigt. Das Rahmenprofil 1 umschließt ein Außenprofil 2 sowie ein Innenprofil 3, wobei die Bezeichnungen "außen" sowie "innen" so verstanden werden sollen, dass das Innenprofil 3 im Einbauzustand eines Sonnenkollektors einer Gebäudeinnenseite zugewandt ist und dass Außenprofil 2 entsprechend umgekehrt die Außenseite eines Gebäudes oder einer Fassade bildet.

Das Außenprofil 2 ist mit dem Innenprofil 3 über zwei Isolierstege 4 verbunden.

Die beiden erwähnten Isolierstege 4, die im Gegensatz zu den aus Aluminium hergestellten Außenprofilen 2 und Innenprofilen 3 aus Kunststoff gefertigt sind, verbinden zwei Materialstege 5 und 6 miteinander, die einerseits am Außenprofil 2 und - gegenüberliegend - am Innenprofil 3 angeformt sind. Durch die Materialstege 5 und 6 sowie die Isolierstege 4 wird insgesamt ein Hohlkammersteg 7 gebildet, der über die äußere, seitliche Begrenzungsebene des Rahmenprofiles 1 im übrigen hinaus hervorsteht. Dieser vorstehende Hohlkammersteg 7 wird als Verbindungssteg genutzt, worauf später noch einmal detailliert eingegangen werden wird.

Das Außenprofil 2 des Rahmenprofiles 1 dient zur Aufnahme einer oberen Abdeckung 8 eines Sonnenkollektors, wobei diese Abdeckung 8 beispielsweise aus einer Glasscheibe bestehen kann und in eine Nut 9 des Außenprofiles 2 eingesetzt ist.

Darüber hinaus ist das Außenprofil 2 mit einer Entwässerungsnut 10, einer Entwässerungskammer 11 sowie einer nach außen geöffneten Entwässerungsnut 12 versehen.

Außerdem ist das Außenprofil 2 mit mindestens einer Belüftungsöffnung 13 ausgestattet, die im Bereich einer seitlich nach außen sich erstreckenden Ausprägung 14 des Außenprofiles 2 liegt.

Hierdurch wird verhindert, dass von außen Wasser in den Sonnenkollektor eindringen kann und trotzdem eine Belüftung des Innenraumes des Sonnenkollektors möglich ist.

Die Verbindung zwischen den Materialstegen 5 und 6 sowie den Isolierstegen 4 erfolgt vorteilhafterweise in Form einer Nut-Feder-Verbindung, und zwar bevorzugt durch das aus dem Fensterbau heraus bekannte Verfahren des Anrollens.

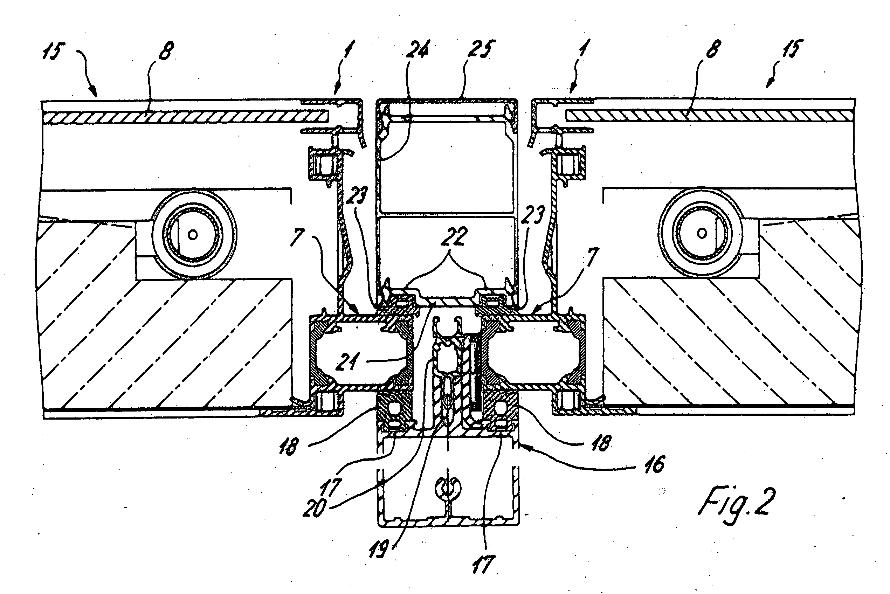

In Figur 2 ist ein Teilausschnitt einer Fassade (oder Lichtkonstruktion) mit eingesetzten Sonnenkollektoren 15 gezeigt, die aus Rahmenprofilen 1 gemäß Figur 1 hergestellt sind.

Die Sonnenkollektoren 15 bilden insoweit Flächenelemente einer Fassaden- oder Lichtkonstruktion.

Als tragendes Element einer derartigen Konstruktion ist in Figur 2 ein Riegel- oder Pfostenprofil 16 gezeigt, welches Nuten 17 und in diesen Nuten 17 eingesetzte Dichtungen 18 aufweist. In der Symmetrieachse des Riegel- oder Pfostenprofiles 16 ist ein Schraubkanal 19 angeordnet, in dem eine Isolierleiste 20 befestigt ist.

In dem Schraubkanal 19 wird ein Halteprofil 21 verschraubt, welches ebenfalls randseitig mit Nuten 22 sowie darin eingesetzten Dichtungen 23 ausgestattet ist.

Zwischen den Dichtungen 18 des Riegel- oder Pfostenprofiles 16 sowie den Dichtungen 23 des Halteprofiles 21 können nun die - wie weiter oben beschrieben gebildeten - Hohlkammerstege 7 als Verbindungsstege eingeklemmt werden, um die Sonnenkollektoren 15 als Flächenelemente in einer Fassaden- oder Lichtkonstruktion zu befestigen.

Mit anderen Worten können aufgrund der speziellen Ausbildung der Rahmenprofile 1 nunmehr Sonnenkollektoren 15 wie herkömmliche Fassadenelemente (Isolierglasscheiben, Paneelen oder dergleichen) in einer Fassadenkonstruktion montiert werden.

Auf das Halteprofil 21 ist ein Adapterprofil 24 aufgesteckt, welches außenseitig eine Deckschale 25 trägt. Diese Deckschale 25 liegt praktisch in einer Ebene mit der außenseitigen Begrenzungsfläche der Sonnenkollektoren 15, die im übrigen deutlich über die eigentliche Tragkonstruktion hinaus nach außen vorstehen.

Hierbei dient das Adapterprofil 24 dazu, diesen Überstand auszugleichen und für die Festlegung der Sonnenkollektoren 15 handelsübliche Halteprofile 21 verwenden zu können. Dabei ist das Adapterprofil 24 so ausgebildet, dass auf dieses Adapterprofil 24 auch handelsübliche Deckschalen 25 aufgesteckt werden können.

Das Adapterprofil 24 kann ohne weiteres auch dazu genutzt werden, Leitungen, zum Beispiel elektrische Leitungen oder flüssigkeitsführende Rohrleitungen oder andere Versorgungsleitungen aufzunehmen.

## Patentansprüche

1. Aus Leichtmetall, insbesondere aus Aluminium hergestelltes Rahmenprofil (1) für einen Sonnenkollektor (15), **dadurch gekennzeichnet, dass** das Rahmenprofil (1) aus einem Außenprofil (2) und einem Innenprofil (3) aus Aluminium sowie aus mindestens einem, mit dem Außenprofil (2) einerseits und dem Innenprofil (3) andererseits verbundenen Isoliersteg (4), vorzugsweise aus Kunststoff, besteht.

2. Rahmenprofil nach Anspruch 1, **dadurch gekennzeichnet, dass** das Außenprofil (2) und Innenprofil (3) an ihren einander zugewandten Enden mit parallel zueinander verlaufenden Materialstegen (5, 6) versehen sind, welche untereinander durch zwei Isolierstege (4) miteinander verbunden sind.

3. Rahmenprofil nach Anspruch 2, **dadurch gekennzeichnet, dass** die Materialstege (5, 6) des Außen- und Innenprofiles (2, 3) gemeinsam mit den Isolierstegen (4) einen Hohlkammersteg (7) bilden, der über die äußere, seitliche Begrenzungsebene des Rahmenprofiles (1) im übrigen hinaus vorsteht und einen in entsprechenden Tragkonstruktionen einklemmbaren Verbindungssteg bilden.

4. Rahmenprofil nach einem der vorhergehenden Ansprüche, **dadurch gekennzeichnet, dass** die Isolierstege (4) in an sich bekannter Weise durch Anrollen mit dem Außen- und dem Innenprofil (2, 3) verbunden sind.

5. Rahmenprofil nach Anspruch 4, **dadurch gekennzeichnet, dass** das Außenprofil (2) und das Innenprofil (3) mittels der Isolierstege (4) in Form einer Nut-Feder-Verbindung form- und kraftschlüssig miteinander verbunden sind.

6. Rahmenprofil nach einem der vorhergehenden Ansprüche, **dadurch gekennzeichnet, dass** das Außenprofil (2) mit mindestens einer Belüftungsöffnung (13) ausgestattet ist, welches sich innerhalb einer seitlich über das Außenprofil (2) im übrigen hinaus vorstehenden Ausprägung (14) befindet.

7. Rahmenprofil nach einem oder mehreren der vorhergehenden Ansprüche, **dadurch gekennzeichnet, dass** das Außenprofil (2) mit einer Aufnahmenut (9) für eine obere Abdeckung (8) eines Sonnenkollektors (15) versehen ist.

8. Rahmenprofil nach einem oder mehren der vorhergehenden Ansprüche, **dadurch gekennzeichnet, dass** das Außenprofil (2) mit einer Entwässerungsnut (10), einer Entwässerungskammer (11) sowie einer nach außen geöffneten Entwässerungsnut (12) versehen ist, wobei die Entwässerungsnut (10) und die Entwässerungskammer (11) über entsprechende Öffnungen, Durchbrüche oder dergleichen mit der Entwässerungsnut (12) in Verbindung stehen.

9. Rahmenprofil nach einem oder mehren der vorhergehenden Ansprüche, **dadurch gekennzeichnet, dass** die Isolierstege (4) aus PVC oder aus Polyamid hergestellt sind.
